(19) Europäisches Patentamt / European Patent Office / Office européen des brevets

(11) **EP 3 407 157 B1**

(12) **EUROPEAN PATENT SPECIFICATION**

(45) Date of publication and mention
of the grant of the patent:
**26.07.2023   Bulletin 2023/30**

(21) Application number: **18172853.6**

(22) Date of filing: **17.05.2018**

(51) International Patent Classification (IPC):
**G06F 1/16** (2006.01)

(52) Cooperative Patent Classification (CPC):
**G06F 1/1616; G06F 1/1677; G06F 1/1694**

(54) **COMPUTING SYSTEM IMPLEMENTING AN ALGORITHM FOR FUSING DATA FROM INERTIAL SENSORS, AND METHOD**

RECHNERSYSTEM ZUR IMPLEMENTIERUNG EINES ALGORITHMUS ZUR FUSION VON DATEN AUS TRÄGHEITSSENSOREN SOWIE VERFAHREN

SYSTÈME INFORMATIQUE METTANT EN  UVRE UN ALGORITHME PERMETTANT DE FUSIONNER DES DONNÉES PROVENANT DE CAPTEURS INERTIELS ET PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **25.05.2017  IT 201700057066**

(43) Date of publication of application:
**28.11.2018   Bulletin 2018/48**

(60) Divisional application:
**23175613.1**

(73) Proprietor: **STMicroelectronics S.r.l.**
**20864 Agrate Brianza (MB) (IT)**

(72) Inventors:
• **ZANCANATO, Alberto**
  **20020 Busto Garolfo (MI) (IT)**

• **FERRAINA, Michele**
  **20151 Milano (IT)**
• **RIZZARDINI, Federico**
  **20019 Settimo Milanese (MI) (IT)**
• **RIVOLTA, Stefano Paolo**
  **20832 Desio (MB) (IT)**

(74) Representative: **Bertolotto, Simone et al**
**Studio Torta S.p.A.**
**Via Viotti, 9**
**10121 Torino (IT)**

(56) References cited:
**EP-A1- 3 065 031       EP-A2- 2 151 734**
**US-A1- 2015 116 362    US-A1- 2015 130 725**

**Description**

*PRIORITY CLAIM*

*This application claims priority from* Italian Patent Application No. 102017000057066 filed on May 25, 2017.

The present invention relates to a computing system and to a method implemented by the computing system, in particular for fusing data originating from inertial sensors in order to calculate an existing angle between respective hardware elements of the computing system in a plurality of operating conditions of the computing system.

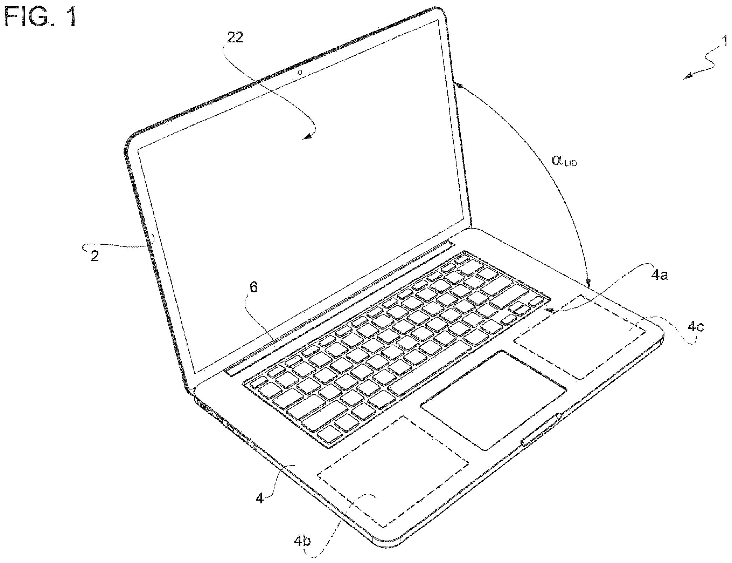

As illustrated in Figure 1, a portable computing device 1 of a known type (e.g., a notebook) is typically formed by two functional blocks 2, 4, in which the functional block 2 houses a display 2a and the functional block 4 houses a keyboard 4a and calculation and memory units 4b, 4c. The functional blocks 2 and 4 are coupled together by means of a pivot 6 configured to allow a rotary movement of the functional block 2 with respect to the functional block 4. The angle $\alpha_{LID}$ formed between the surface of the functional block 2 (corresponding to the display 2a) and the surface of the functional block 4 (corresponding to the keyboard 4a) is known as "opening angle" or as "lid angle". By convention, the angle $\alpha_{LID}$ is equal to 0° when the surface of the functional block 4 is parallel to, and directly facing the surface of the functional block 2; and is equal to 360° when the surface of the functional block 4 is parallel to the surface of the functional block 2 but oriented in the opposite direction.

The amplitude of the angle $\alpha_{LID}$ is typically used to adapt or modify a user interface displayed by means of the display 2a in order to render the portable computing device 1 more user-friendly.

With the spread of portable devices such as tablets, smartphones and the like, there has been increasing use of accessories such as keyboards external to the portable device, which are operatively coupled thereto, for example incorporated in a cover of the portable device and connected to the portable device by means of a wireless connection. These covers are provided with means for supporting/holding the portable device so as to render use thereof more similar to that of a notebook of the type illustrated in Figure 1. Also in this case, as described with reference to Figure 1, it is expedient to measure the angle $\alpha_{LID}$ formed between the display of the portable device and the upper surface of the accessory considered, for example the keyboard. It is thus possible to adapt or personalise the user interface or given configurations of the notebook 1 (or of the portable device used) on the basis of the value of the angle $\alpha_{LID}$, thus rendering the portable device more user-friendly and affording new possibilities for use thereof.

Known methods for detecting the angle $\alpha_{LID}$ envisage the use of an accelerometer mounted in the functional block 2 and an accelerometer mounted in the functional block 4. These accelerometers supply data representing the direction of the force of gravity with respect to a system of coordinates centred on said accelerometer, thus making it possible to identify a position of the functional block 2 with respect to the functional block 4. However, since known methods are based exclusively on the information provided by gravity, they do not make it possible to provide indications that are useful for all orientations and spatial arrangements of the portable device, and are moreover subject to environmental vibrational stimuli that may render the measurement imprecise or wrong.

The document US2015/130725 describes a dual-display system in which an opening angle between the two displays is calculated by using measurements of accelerometers, gyroscopes, and a reference sensor of geomagnetic field. According to this disclosure, the absolute position in the space of each display is calculated by using the measurements made by the accelerometers, the gyroscopes, and the geomagnetic sensor, and, by means of generic data-fusion algorithms, said opening angle is then calculated. This solution, envisaging the use of a geomagnetic sensor, is subject to possible errors and faults caused by unforeseeable magnetic interference and by the fact that the magnetic conditions themselves change according to the relative position of the two displays. The value of opening angle obtained by means of the system disclosed in US2015/130725 is consequently not reliable in all operating conditions.

A second example of a solution known in the prior art is disclosed by document US2015/116362.

The aim of the present invention is to provide a computing system and a corresponding method that will be free from the drawbacks of the prior art.

According to the present invention, a computing system and a corresponding method are provided, as defined in the annexed claims.

For a better understanding of the present invention, preferred embodiments thereof will now be described purely by way of non-limiting example with reference to the appended drawings, wherein:

- Figure 1 shows a computing device, in particular a notebook, provided with accelerometers and a calculating unit, configured to calculate an angle of opening of the display with respect to the keyboard, according to an embodiment of a known type;
- Figure 2 shows a perspective view of a computing device, in particular a notebook, provided with accelerometers, gyroscopes, and a calculating unit, configured to calculate an angle of opening of the display with respect to the keyboard, according to an embodiment of the present invention;
- Figure 3 shows a lateral view of the computing device in Figure 2 in three operating conditions alternative to one another;

- Figure 4 shows a front view of the computing device in Figure 2 in a further operating condition; and
- Figure 5 is a schematic illustration of functional blocks implemented by the computing device of Figure 2, according to an embodiment of the present invention.

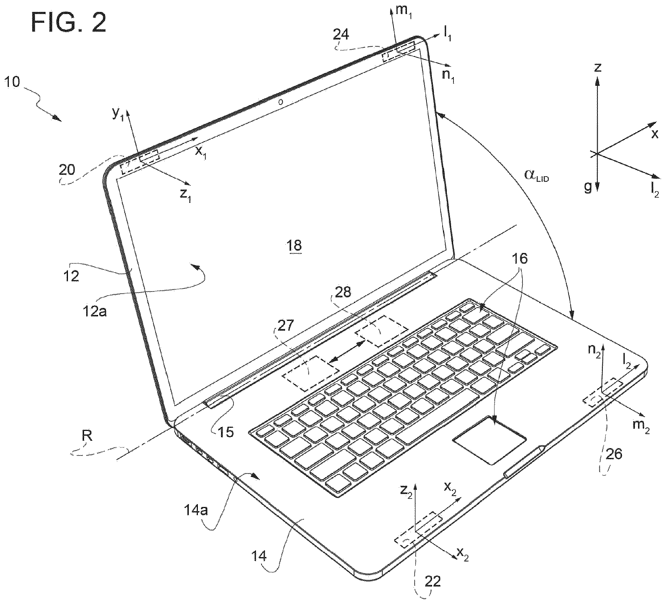

With reference to Figure 2, according to one aspect of the present invention, a computing device 10 is shown in a triaxial reference system X, Y, Z in which the vector g represents the gravitational-acceleration vector acting parallel to the axis Z.

The computing device 10, which is structurally similar to the device 1 of Figure 1, is of a portable type (in particular a notebook) and is here shown in an operating condition where the device is open. The computing device 10 includes a lid portion 12 and a base portion 14, mechanically coupled together by means of a hinge 15 that allows the lid portion 12 to rotate with respect to the base portion 14, thus forming a rotational constraint about an axis R parallel to the axis X. The base portion 14 comprises a data-input device 16 (or a number data-input of devices) (e.g., a keyboard and/or a trackpad), which extend over a surface 14a of the base portion 14. The lid portion 12 comprises a display region 18 (e.g., a screen or monitor) that extends over a surface 12a of the lid portion 12. The lid portion 12 houses (e.g., incorporates within it) a first inertial sensor 20, in particular a first accelerometer, configured to detect and/or calculate values of acceleration of the lid portion 12 along respective detection axes $x_1$, $y_1$, $z_1$; and the base portion 14 houses (e.g. incorporates within it) a second inertial sensor 22, in particular a second accelerometer, configured to detect and/or calculate values of acceleration of the base portion 14 along corresponding detection axes $x_2$, $y_2$, $z_2$. In general, the first and the second accelerometers 20, 22 are adapted to detect a movement of the computing device 10 by measuring an acceleration. The first and the second accelerometers 20, 22 are, for example, accelerometers manufactured using MEMS technology.

The first and the second accelerometers 20, 22 are therefore adapted to detect variations with respect to a state of rest of the computing device 10, or vibrations to which the computing device 10 or the environment in which the computing device 10 is located is subjected, for example, caused vibrations by a movement (e.g., walking) of the user of the computing device 10 or a means of transport on which the computing device 10 is located. Other movements that the first and the second accelerometers 20, 22 may detect include rotations imparted by the user on the computing device 10, and the change of a mutual position between the lid portion 12 and the base portion 14 (for example, due to opening and closing of the lid portion, which rotates about the axis R as a result of the presence of the hinge 15). In this latter case, in particular, the first and the second accelerometers 20, 22 are used to determine the opening angle $\alpha_{LID}$ between the detection axis $y_1$ and the axis $y_2$ of the respective first and second accelerometers 20, 22. The opening angle $\alpha_{LID}$ is hence correlated with the angle existing between the surface 12a of the lid portion 12 and the surface 14a of the base portion 14, and is also known as "lid angle". In use, it is possible to correlate the value of the opening angle $\alpha_{LID}$ with a mode of use of the computing device 10 (for example, an opening angle $\alpha_{LID}$ having a value approximately equal to 130° suggests use thereof in laptop mode, whereas an opening angle $\alpha_{LID}$ having a value equal to 360° suggests use in tablet mode) . It is thus possible to adapt the graphic interface appearing on the display 18 to the type of operating mode, or else to adapt other operating parameters of the computing device 10, for example, to enable the touch-screen function when use of the device in tablet mode is detected, or else to vary yet other parameters such as switching-on/switching-off of the display or of the computing device 10 if the value of the opening angle is greater/less than a certain threshold.

According to one aspect of the present invention, the lid portion 12 moreover houses (e.g., incorporates within it) a third inertial sensor 24, in particular a first gyroscope, configured to detect and/or calculate an orientation and rotation of the lid portion 12 along and about detection axes $l_1$, $m_1$, $n_1$ that are parallel to the detection axes $x_1$, $y_1$, $z_1$, respectively, of the first accelerometer 20; and the base portion 14 moreover houses (e.g., incorporates within it) a fourth inertial sensor 26, in particular a second gyroscope, configured to detect and/or calculate an orientation and rotation of the base portion 14 along and about detection axes $l_2$, $m_2$, $n_2$ that are parallel to the detection axes $x_2$, $y_2$, $z_2$, respectively, of the second accelerometer 22.

It should be noted that, in the embodiment of the computing device 10 considered here, the axis R of the hinge 15 is always parallel to the detection axes $x_1$, $x_2$, $l_1$, $l_2$ in any operating condition (with the lid portion 12 closed or open) and for any orientation of the device 10 in the triaxial system X, Y, Z.

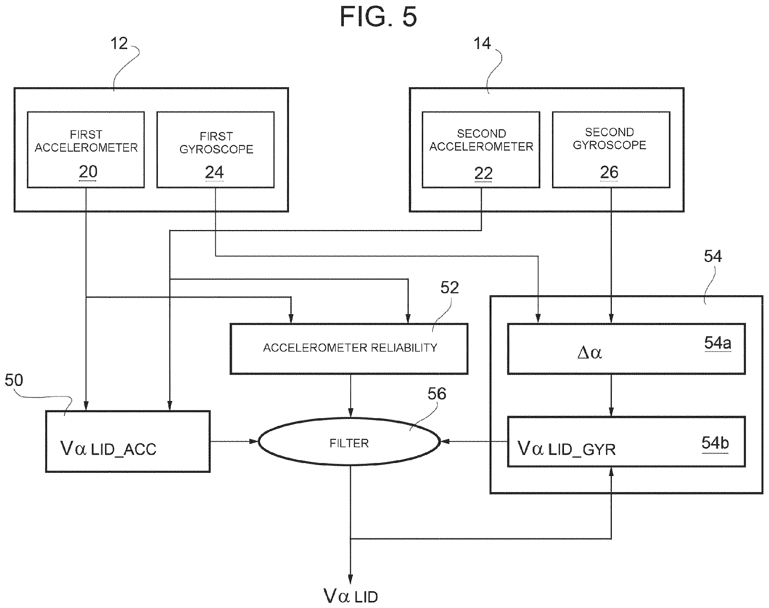

The computing device 10 moreover comprises a calculating unit 27 and a memory unit 28, which are coupled together. The calculating unit 27 and/or the memory unit 28 are also operatively coupled to the first and the second accelerometers 20, 22 and to the first and to the second gyroscopes 24, 26 to receive therefrom the respective operating signals generated at output (the signals of acceleration/angular rate generated according to operation of the accelerometers and of the gyroscopes, which is in itself known). The signals received at input by the calculating unit are processed as described more fully hereinafter with reference to Figure 5.

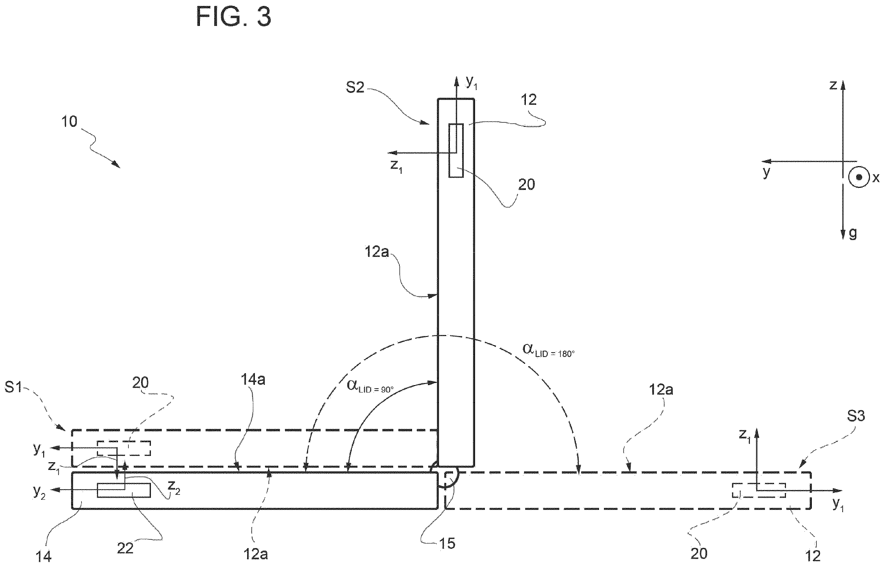

Figure 3 illustrates, in a lateral view in the plane YZ, the computing device 10 of Figure 2, where the lid portion 12 is represented in three possible operating conditions S1-S3: the lid portion 12 closed on the base portion 14 to define

an angle $\alpha_{LID}$ having a zero value (S1); the lid portion 12 defining an angle $\alpha_{LID}$ equal to 90° with respect to the base portion 14 (S2); and the lid portion 12 defining an angle $\alpha_{LID}$ equal to 180° with respect to the base portion 14 (S3).

In the operating conditions S1-S3, the angle $\alpha_{LID}$ is the relative angle between the detection axis $y_1$ and the detection axis $y_2$ of the accelerometers 20 and 22, and since it has been assumed that these detection axes $y_1$, $y_2$ are parallel to the surfaces 12a, 14a of the lid portion 12 and of the base portion 14, respectively, the angle $\alpha_{LID}$ is also the relative angle between the surfaces 12a, 14a of the lid portion 12 and of the base portion 14. By determining the value of the angle $\alpha_{LID}$, it is hence possible to determine the angle of opening (or lid angle) of the lid portion 12 with respect to the base portion 14. The same angular quantity can be defined between the axes $z_1$ and $z_2$, which are always normal to the surfaces.

Upon passage from the operating condition S1 to the operating condition S2 (or likewise from the operating condition S2 to the operating condition S3), the first accelerometer 20 detects a variation in the component of the gravitational-acceleration vector g along the axes $z_1$ and $y_1$ and determines that the angle $\alpha_{LID}$ increases (the reverse applies in the case of passage from the condition S2 to the condition S1, or from the condition S3 to the condition S2).

It may be noted in particular that, in the operating condition S1, the gravitational-acceleration vector is given exclusively by the value detected on the axis $z_1$, and in the operating condition S2 it is given exclusively by the value detected on the axis $y_1$. In an intermediate condition, for example, when the angle $\alpha_{LID}$ is equal to 45°, along both the axes $y_1$ and $z_1$ the same acceleration value is obtained.

In the operating condition S1, the detection axis $z_1$ is parallel to the gravitational-acceleration vector g (the projection of the vector g on the axis $z_1$ is maximum), in the operating condition S2, the detection axis $z_1$ is orthogonal to the gravitational-acceleration vector g (the projection of the vector g on the axis $z_1$ is minimum), and in the operating condition S3, the detection axis $z_1$ is parallel to the gravitational-acceleration vector g, but in the opposite direction with respect to the operating condition S1 (the projection of the vector g on the axis $z_1$ is maximum, but with an opposite value).

In order to calculate a value of the angle $\alpha_{LID}$, it is possible to make use of the projection of the gravitational-acceleration vector g on the corresponding three detection axes of the first and the second accelerometers 20, 22, taking into consideration the constraints due to the presence of the hinge 15. In this case, the value $V\alpha_{LID\_ACC}$ of the angle $\alpha_{LID}$ can be calculated as:

$$\mathrm{atan2}\left(\frac{A_{z1}A_{y2} - A_{y1}A_{z2}}{A_{z1}A_{z2} + A_{y1}A_{y2}}\right) + \pi \quad \mathrm{(rad)} \quad\quad\quad (1)$$

where atan2 is the known trigonometric function, $A_{z1}$ is the acceleration value detected by the first accelerometer 20 along the detection axis $z_1$, $A_{y1}$ is the acceleration value detected by the first accelerometer 20 along the detection axis $y_1$, $A_{z2}$ is the acceleration value detected by the second accelerometer 22 along the detection axis $z_2$, and $A_{y2}$ is the acceleration value detected by the second accelerometer 22 along the detection axis $y_2$.

Formula (1) shows how the value $V\alpha_{LID\_ACC}$ measured via the accelerometers 20, 22 represents a relative orientation (i.e., not an absolute orientation in space) between the lid portion 12 and the base portion 14.

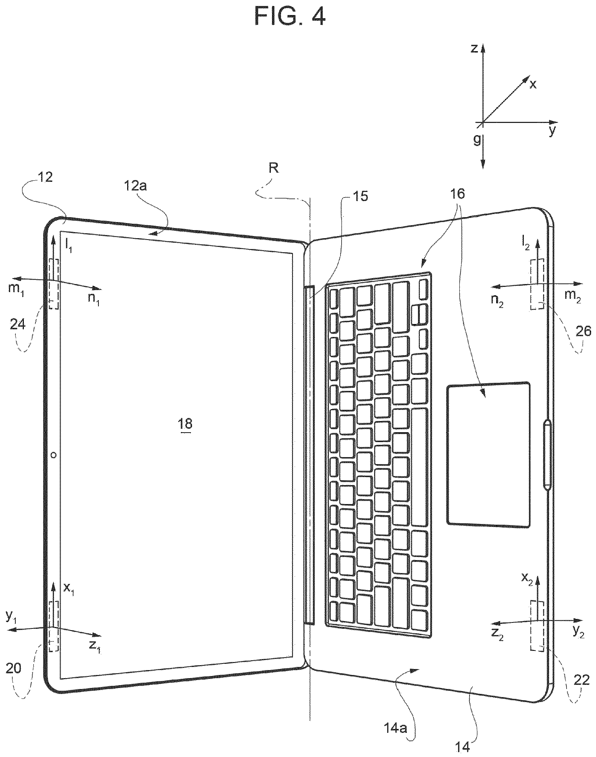

Figure 4 shows a mode of use of the computing device 10 in which the computing device 10 is oriented with the axis R parallel to the axis Z, i.e., parallel to the gravity vector g. In this case, passage into the operating conditions S1-S2-S3 does not give rise to any variation in the acceleration component along the detection axes $z_1$, $z_2$ and $y_1$, $y_2$ of the first and the second accelerometers 20, 22, since the component of the force of gravity along the axes indicated is always zero or substantially zero (the values $A_{z1}$, $A_{z2}$ and $A_{y1}$, $A_{y2}$ in formula (1) are approximately zero).

Situations of intermediate orientation where the axis R forms an angle of less than 90° but greater than 0° with the axis Z lead to measurements of the angle $\alpha_{LID}$ that are the further away from the true value, the closer the orientation approaches the condition of Figure 4 (axis R parallel to the axis Z).

What has been described with reference to Figure 4 also applies, in a way that is in itself obvious, to the operating condition (not illustrated) wherein the computing device 10 is oriented with the axis R parallel to the axis Z, but rotated through 180° with respect to the orientation shown in Figure 4.

In order to overcome the above disadvantage, according to one aspect of the present invention, the measurements obtained from the first and the second accelerometers 20, 22 are fused with the measurements obtained from the first and from the second gyroscopes 24, 26, for example assigning to the measurements obtained from the first and from the second gyroscopes 24, 26 a weight that is the greater (and, accordingly, assigning to the measurements obtained from the first and from the second accelerometers 20, 22 a weight that is the smaller), the more the angle between the axis R and the axis Z increases (i.e., the closer the angle approaches the condition of Figure 4). In this way, it is also possible to filter the linear accelerations (i.e., ones not due to the force of gravity).

The use of the gyroscopes solves two problems: (i) use of the processing device like "a book"; and (ii) filtering of the linear accelerations (amongst which, in situations where the user is walking or with fast opening and closing of the base and lid portions).

The present applicant has, in fact, found that a system including just two accelerometers would not be able to overcome the two problems referred to above; as regards filtering of the linear accelerations, in actual fact, the estimate becomes reliable only when the device 1 is substantially stationary (the accelerometers detect only the acceleration of gravity and calculate the angle comprised between the two gravity vectors detected). Fusion of the data with the data of the gyroscopes is not carried out occasionally: as will be described more fully in what follows, according to one aspect of the present invention, a complementary filter is used (but other types of filtering, e.g., Kalman filtering, may also used) and the accelerometric component is discarded or attenuated when the conditions presented above in points (i) and (ii) arise. In this way, not only are the deficiencies of the prior art overcome in the conditions of points (i) and (ii), but the system becomes more reactive (if only the accelerometers were used, it would be necessary to carry out a low-pass filtering, thus introducing latencies). The accelerometric component has, specifically, the function of correcting the drift of the angle calculated with the gyroscopes.

The gyroscopic contribution obtained by means of the measurements of the first and the second gyroscopes 24, 26 acquired at a current instant t in time is given by:

$$\Delta\alpha = (\omega_{x1} - \omega_{x2}) \cdot dt \qquad (2)$$

where $\omega_{x1}$ is the angular rate measured by the first gyroscope 24, $\omega_{x2}$ is the angular rate measured by the second gyroscope 26. The value dt is the time that has elapsed between the instant t-1 and the instant t (sampling time or data-acquisition time of the output of the gyroscopes 24, 26, which in turn may depend upon the update time of the system, for example, corresponding to a rate of between 25 Hz and 200 Hz). For example, if sampling of the output of the gyroscopes is made at 100 Hz, the parameter dt is equal to 0.01 seconds.

According to one aspect of the present invention, the calculating unit 27, with the possible support of the memory unit 28, is configured for performing the operations shown in Figure 5 and described below. Figure 5 is a schematic illustration of functional blocks implemented, via software, by the calculating unit 27 and memory unit 28. It is evident that the functional blocks in Figure 5 may be implemented via hardware, in a way that is in itself evident to the person skilled in the art.

In a typical condition of use of the computing device 10, the base portion 14 of the computing device 10 lies in a horizontal plane XY, supported on an ideally flat surface. The detection axis $z_1$ of the first accelerometer 20 is perpendicular to the display 18 and yields information relative to the gravitational acceleration that varies as a function of the opening angle $\alpha_{LID}$. The second accelerometer 22 has its respective detection axis $z_2$, which in this operating condition is orthogonal to the plane XY and to the surface 14a of the base portion 14.

Since the accelerometers 20, 22 are in a fixed position and the orientation of the detection axes are known, it is possible to calculate the value $V\alpha_{LID\_ACC}$ of the angle $\alpha_{LID}$ as expressed in formula (1).

When the detection axis $z_1$ is perfectly horizontal (i.e., parallel to the axis Y or to the plane XY), we are in a condition of zero gravitational force, and a signal $S_{z1}$ generated at output from the first accelerometer 20 has a first value $S_{z1}'$; when the detection axis $z_1$ is perfectly vertical (i.e., is parallel to the axis Z or to the plane XZ), we are in a condition of maximum gravitational force along $z_1$ and minimum gravitational force along $x_1$ and $y_1$, and the signal S generated at output from the first accelerometer 20 has a second value $S_{z1}''$. Intermediate situations generate respective signals at output from the first accelerometer 20 having a value ranging between $S_{z1}'$ and $S_{z1}''$. However, when the computing device is inclined, forming an angle between the base portion 14 and the horizontal plane XY, and in particular when the computing device is arranged in the operating condition of Figure 4, the effect of gravity along the detection axes $z_1$ and $z_2$ varies; in particular, it decreases until it becomes zero in the operating condition of Figure 4. It is hence evident that the calculation of the value $V\alpha_{LID\_ACC}$ using formula (1), which only makes use of the output signals generated by the first and by the second accelerometers 20, 22, becomes increasingly unreliable, the closer the arrangement of the computing device approaches the operating condition of Figure 4.

To overcome this drawback, which is caused in particular by the conditions (i) and (ii) set forth above, and yield results that are reliable, in terms of calculation of the angle $\alpha_{LID}$ in all the possible conditions in which the computing device 10 is used, it is convenient to fuse the measurements of the accelerometers 20, 22 with the measurements of the gyroscopes 24, 26.

Thus, with reference to Figure 5, a first calculation block 50 implements the formula (1). For this purpose, the first calculation block 50 receives at input the acceleration values $A_{z1}$, $A_{y1}$, $A_{z2}$, and $A_{y2}$ from the first and from the second accelerometers 20, 22 and yields at output a value $V\alpha_{LID\_ACC}$ of the opening angle $\alpha_{LID}$.

Once again with reference to Figure 5, a reliability block 52 receives at input, from the first and from the second accelerometers 20, 22, (gravitational) acceleration values $A_{x1}$, $A_{x2}$ detected by the respective accelerometer along the detection axes $x_1$ and $x_2$, respectively. Under operating conditions in which the detection axes $x_1$ and $x_2$ are parallel to the horizontal plane XY, the acceleration values $A_{x1}$, $A_{x2}$ have the minimum value. Instead, in the operating condition of Figure 4, the acceleration values $A_{x1}$, $A_{x2}$ have the maximum value (the minimum and maximum values depend on the type of inertial sensor used and are defined by the manufacturer). In one embodiment, it is thus possible to define a reliability threshold below which the calculation of the opening angle $\alpha_{LID}$ obtained using formula (1) is deemed correct or reliable, and above which the calculation of the opening angle $\alpha_{LID}$ obtained using formula (1) is not deemed correct or reliable. In the case of the computing device 10 of the type illustrated in Figures 2-4, where the base portion 14 is integral with respect to the lid portion 12, it is possible to evaluate reliability by analysing only one of the acceleration values $A_{x1}$, $A_{x2}$. However, since the base portion 14 might, in general, not be integral with respect to the lid portion 12, it is preferable to evaluate both the acceleration values $A_{x1}$, $A_{x2}$. In this latter case, calculation of the value $V\alpha_{LID\_ACC}$ of the opening angle $\alpha_{LID}$ obtained using the formula (1) is considered reliable only if both the acceleration values $A_{x1}$, $A_{x2}$ are below the predetermined threshold. The reliability block 52 generates at output a reliability value k, which may be a binary value in the case of a single threshold (reliable/unreliable), or a value that is proportional to a degree of reliability found. In this latter case, it is possible to envisage a plurality of comparison thresholds for the acceleration values $A_{x1}$, $A_{x2}$ by varying the value k according to a step function, associating a different value of k to the overstepping of each threshold envisaged. The value of k will therefore vary between a minimum value and a maximum value as the acceleration values $A_{x1}$ and/or $A_{x2}$ increase; the minimum value of k may be the zero value, whereas the maximum value of k is chosen between 0 and 1 on the basis of the considerations made hereinafter with reference to the block 56 (i.e., in order to obtain adequate filtering of the vibrational components, or of the variations in the acceleration values $A_{x1}$ and/or $A_{x2}$ that are not due to the force of gravity acting on the detection axes $x_1$ and $x_2$).

The reliability block 52 may implement further functions, such as for example detection of whether a user of the computing device 10 is walking, is moving, etc. For this purpose, the reliability block 52 receives at input further parameters. It is possible, for example, to analyse some or all of the accelerometer axes, or the module integrating the accelerometer, or it is likewise possible to calculate, for each axis and/or module, statistical indicators such as mean, variance, zero-crossing, peaks, maximum and minimum, etc. These parameters may also be taken into consideration for the gyroscope.

A second calculation block 54 is configured to receive at input the values of angular rate $\omega_{x1}$, $\omega_{x2}$ detected by the first and by the second gyroscopes 24, 26 and calculating the value $V\alpha_{LID\_GYR}$ of the opening angle $\alpha_{LID}$ on the basis of the formula (3) given in what follows.

For this purpose, the second calculation block 54 includes a sub-block 54a, which is configured to calculate (at the instant t) the variation $\Delta_\alpha$ of the value $V\alpha_{LID}$ of the opening angle $\alpha_{LID}$ with respect to the value previously measured (at the previous instant t-1), according to formula (2) appearing above.

In addition, the second calculation block 54 includes a further sub-block 54b configured to receive the value of variation $\Delta_\alpha$ and the last value $V\alpha_{LID}(t-1)$ of the opening angle $\alpha_{LID}$ calculated and deemed reliable (e.g., generated at output from the block 56 described hereinafter), and updating recursively said last value $V\alpha_{LID}(t-1)$ of the opening angle using the value of variation $\Delta_\alpha$.

The sub-block 54b thus implements the following formula (3) (as, on the other hand, is illustrated graphically also in Figure 5):

$$V\alpha_{LID\_GYR}(t) = \Delta_\alpha + V\alpha_{LID}(t-1) \tag{3}$$

A fusion block 56 has the function of generating a final value, which is deemed reliable, of the opening angle $\alpha_{LID}$ on the basis of the reliability value k calculated by the reliability block 52. The fusion block 56 receives at input both of the values of the opening angle $\alpha_{LID}$ calculated according to formula (1) (i.e., using only the signals of the accelerometers 20, 22) and according to formula (3) (i.e., updating the last value $V\alpha_{LID}$ calculated using an angular variation obtained by means of measurements supplied by the gyroscopes 24, 26) .

For greater clarity, in the sequel of the description and in Figure 5, the value of the opening angle $\alpha_{LID}$ calculated according to the formula (1) is identified as $V\alpha_{LID\_ACC}$ and the value of the opening angle $\alpha_{LID}$ calculated according to the formula (3) is identified as $V\alpha_{LID\_GYR}$.

The fusion block 56 implements a complementary filter, defined by the following formula (4):

$$V\alpha_{LID}(t) = k \cdot V\alpha_{LID\_ACC}(t) + (1-k) \cdot V\alpha_{LID\_GYR}(t) \tag{4}$$

The ricursiveness of the complementary filter may be better appreciated by expanding, in formula (4), the term $V\alpha_{LID\_GYR}(t)$ with the relative formulas (2) and (3), thus obtaining:

$$V\alpha_{LID}(t) = k \cdot V\alpha_{LID\_ACC}(t) + (1-k) \cdot ((\omega_{x1} - \omega_{x2}) \cdot dt + V\alpha_{LID}(t-1))$$

On the first iteration of the method for calculating the value $V\alpha_{LID}(t)$ according to Figure 5, since there is no value $V\alpha_{LID}(t-1)$ for the previous instant t-1 as required by the sub-block 54b, for example $V\alpha_{LID}(t)$, is set equal to $V\alpha_{LID\_ACC}(t)$ or equal to a predefined value.

By appropriately setting the value of k, the complementary filter of formula (4) makes it possible to perform low-pass filtering of the component $V\alpha_{LID\_ACC}$ (thus filtering out the pulse signals caused by instantaneous vibrations or movements and detected by the accelerometers) and high-pass filtering of the component $V\alpha_{LID\_GYR}$. For example, the value of k may vary between k=0, in the case where the measurements obtained from the accelerometers (output from the reliability block 52) have proven to be unreliable, and k=0.1 in the case where they are fully reliable. Intermediate values of k between 0 and 0.1 may be used in the case where the reliability block 52 envisages use of a plurality of thresholds, as described previously. It is evident that the value of k may differ from the values indicated previously and may vary, for example, between 0 and 0.5, preferably between 0 and 0.2, in order to ensure low-pass filtering in any event.

The applicant has found that, in general, the results from the calculation of the opening angle $\alpha_{LID}$ obtained using the gyroscopes 24, 26 are more accurate, in the short term, than those obtained using only the accelerometers 20, 22. This is due to the fact that the gyroscopes are not sensitive to high-frequency disturbances, as is, instead, the case for the accelerometers. However, errors associated to the calculation of the angle $\alpha_{LID}$ using the signals supplied by the gyroscopes (e.g., integration errors, drift, etc.) may add up over time, giving rise to a cumulative error of a significant amount. Consequently, the filtering operation performed by the fusion block 56 presents the dual advantage of overcoming both the drawbacks associated to calculation of the opening angle made using only accelerometers (already discussed previously) and the drawbacks associated to calculation of the opening angle made using only gyroscopes (error accumulation and lack of knowledge of the initial opening angle at the moment when the system is switched on).

From what has been described above, the advantages of the present invention emerge clearly.

In particular, the operations of calculation of the opening angle between the lid portion 12 and the base portion 14 do not require calculation of the absolute orientation of the lid portion 12 and of the base portion 14, unlike the solutions according to the prior art in which measurements are made of absolute orientation in space of respective functional blocks, with respect to which an opening angle is to be calculated.

Moreover, the use of the weight k, associated, as has been said, to an evaluation of reliability of the measurements made via the accelerometers, renders the methodology according to the present invention adaptive as a function of different operating conditions and of the service life of the accelerometers themselves.

The use of recursive formulas, with a closed-loop system, render moreover the system as a whole stable, fast, and with low computational load.

Finally, it is clear that modifications and variations may be made to what has been described and illustrated herein, without thereby departing from the scope of protection of the present invention, as defined in the annexed claims.

In general, in the context of the present disclosure, the angle $\alpha_{LID}$ is the angle between two elements or parts (which may even be detached or separate from one other, or without the hinge 15) which concur to form an electronic device or system for display of information. These elements or parts are, for example: a keyboard and a display; a dual-display device; a keyboard and a tablet; a keyboard and a smartphone; a smartphone and a tablet; two smartphones; two tablets; or any other combination of keyboard, tablet, smartphone, and display.

In addition, it will be noted that the accelerometers 20 and 22 and the gyroscopes 24 and 26 may be implemented: (i) in modules that are separate from each other; (ii) in 6-axis inertial sensor modules (where one module incorporates the accelerometer 20 and the gyroscope 24, and one module incorporates the accelerometer 22 and the gyroscope 26); (iii) in 9-axis inertial sensor modules (where one module incorporates the accelerometer 20, the gyroscope 24, and a magnetometer, and one module incorporates the accelerometer 22 and the gyroscope 26 and a further magnetometer). In the latter case, the magnetometer, albeit present, is not used for the purposes of the present invention.

More specifically, the above detailed description and the accompanying drawings disclose aspects and embodiments provided for the understanding of the invention. The scope of the invention is defined uniquely by the appended claims.

## Claims

1. A computing system (10) including:

   - a first hardware element (12; 14), housing a first accelerometer (20; 22) and a first gyroscope (24; 26);
   - a second hardware element (14; 12), housing a second accelerometer (22; 20) and a second gyroscope (26; 24), which can be oriented with respect to the first hardware element (12) and defines an opening angle ($\alpha_{LID}$) with said first hardware element (12; 14); and
   - a calculating unit (27, 28) configured to perform the operations of:

      acquiring, from the first and from the second accelerometers (20, 22) respective acceleration signals and from the first and from the second gyroscopes (24, 26), respective angular rate signals;

estimating, based on the acceleration signals, a first intermediate value ($V\alpha_{LID\_ACC}$) of said opening angle ($\alpha_{LID}$), which represents a first angular orientation of the first hardware element (12) relative to the second hardware element (14) ;

estimating, based on the angular rate signals, a second intermediate value ($V\alpha_{LID\_GYR}$) of said opening angle ($\alpha_{LID}$), which represents a second angular orientation of the first hardware element (12) relative to the second hardware element (14) ;

recursively updating a current value of said opening angle ($\alpha_{LID}$), including carrying out a weighted sum of the first intermediate value ($V\alpha_{LID\_ACC}$) and second intermediate value ($V\alpha_{LID\_GYR}$); and

controlling at least one function of said computing system (10) on the basis of the current value of the opening angle ($\alpha_{LID}$),

wherein the first hardware element (12) is provided with a first device (18) for interaction with a user, and the second hardware element (14) is provided with a second device (16) for interaction with said user;

wherein the first and the second interaction devices (18, 16) define a first surface (12a) and a second surface (14a), respectively, which face each other directly in a first operating condition of the computing system (10);

wherein:

the first accelerometer (20) is a triaxial accelerometer having a first detection axis (z1), a second detection axis (y1), and a third detection axis (x1) of its own, which is configured to detect an acceleration of the first hardware element (12) with respect to the second hardware element (14) out of a horizontal plane (XY) parallel, in the first operating condition, to the first and to the second surfaces (12a, 14a), said signals generated by the first accelerometer (20) including acceleration values along said first, second, and third detection axes of the first accelerometer (20), and

the second accelerometer (22) is a triaxial accelerometer having a first detection axis (z2), a second detection axis (y2), and a third detection axis (x2) of its own, which is configured to detect an acceleration of the first hardware element (12) with respect to the second hardware element (14) out of a horizontal plane (XY), said signals generated by the second accelerometer (22) including acceleration values along said first, second, and third detection axes of the second accelerometer (22);

wherein the first and the second hardware elements (12, 14) can be oriented with respect to each other in such a way that, in a second operating condition of the computing system (10), the first surface (12a) is orthogonal to the second surface (14a);

and wherein:

the first accelerometer (20) is oriented in such a way that, in the first operating condition, only its first detection axis (z1) is subject to the gravitational acceleration and, in the second operating condition, only its second detection axis (y1) is subject to the gravitational acceleration, and said calculating unit being configured to reduce a weight assigned to the first intermediate value ($V\alpha_{LID\_ACC}$) and, at the same time, increase a weight assigned to the second intermediate value ($V\alpha_{LID\_GYR}$) during calculation of said sum, which is weighted as a function of the acceleration value detected along the third detection axis (x1) of the first accelerometer (20) in a third operating condition in which the third detection axis (x1) of the first accelerometer (20) is subject to gravitational acceleration.

2. The computing system according to Claim 1, wherein the operation of recursively updating the current value of said opening angle ($\alpha_{LID}$) includes implementing a low-pass filtering of the first intermediate value ($V\alpha_{LID\_ACC}$) and a high-pass filtering of the second intermediate value ($V\alpha_{LID\_GYR}$).

3. The computing system according to Claim 2, wherein said filtering is carried out by means of a complementary filter.

4. The computing system according to anyone of the preceding claims, wherein the operation of carrying out the weighted sum includes performing the operation:

$$k \cdot V\alpha_{LID\_ACC} + (1-k) \cdot V\alpha_{LID\_GYR}$$

where $V\alpha_{LID\_ACC}$ is the first intermediate value, $V\alpha_{LID\_GYR}$ is the second intermediate value, and k is a weight having a value equal to, or greater than, 0 and less than 1.

5. The computing system according to Claim 1, wherein the operation of carrying out the weighted sum includes implementing a recursive complementary filter defined by:

$$V\alpha_{LID}(t) = k \cdot V\alpha_{LID\_ACC}(t) + (1-k) \cdot (\Delta_\alpha + V\alpha_{LID}(t-1))$$

where:

$V\alpha_{LID}$ (t) is the current value of the opening angle ($\alpha_{LID}$);
k is a weight indicative of a reliability of said measurement signals of relative orientation of the first and the second hardware elements;
$V\alpha_{LID\_ACC}$ (t) is the first intermediate value;
$\Delta_\alpha$ is an angular variation obtained as a function of a first value ($\omega_1$) and a second value ($\omega_2$) of angular rate measured by the first and by the second gyroscopes (24, 26), respectively; and
$V\alpha_{LID}$(t-1) is a value of the opening angle preceding in time the current value.

6. The computing system according to anyone of the preceding claims, wherein the operation of controlling at least one function of said computing system (10) on the basis of the current value of said angle ($\alpha_{LID}$) comprises adapting operating characteristics of the first interaction device (18) and/or of the second interaction device (16).

7. The computing system according to anyone of the preceding claims, wherein the first interaction device (18) and the second interaction device (16) are chosen from among: a display, a keyboard, a tablet, and a smartphone.

8. The computing system according to Claim 4 or Claim 5, wherein, in the third operating condition, the third detection axis ($x_1$) of the first accelerometer (20) forms an angle other than 90° with the gravitational-acceleration vector (g), said weight (k) having a value that is a function of the value of the angle between the third detection axis ($x_1$) of the first accelerometer (20) and the gravitational-acceleration vector (g).

9. The computing system according to anyone of the preceding claims, wherein, in the first operating condition, the first detection axis ($z_1$) of the first accelerometer (20) is parallel to the gravitational-acceleration vector (g), whereas the second and the third detection axes ($y_1$, $x_1$) are perpendicular to the gravitational-acceleration vector (g); and, in the second operating condition, the second detection axis ($y_1$) of the first accelerometer (20) is parallel to the gravitational-acceleration vector (g), whereas the first and third detection axes ($z_1$, $x_1$) are perpendicular to the gravitational-acceleration vector (g).

10. The computing system according to Claim 1, wherein calculation of the first intermediate value ($V\alpha_{LID\_ACC}$) includes performing the operation:

$$\text{atan2}\left(\frac{A_{z1}A_{y2} - A_{y1}A_{z2}}{A_{z1}A_{z2} + A_{y1}A_{y2}}\right) + \pi$$

where $A_{z1}$ is a value of acceleration detected by the first accelerometer (20) along its first detection axis ($z_1$), $A_{y1}$ is the value of acceleration detected by the first accelerometer (20) along its second detection axis ($y_1$), $A_{z2}$ is the value of acceleration detected by the second accelerometer (22) along its first detection axis ($z_2$), and $A_{y2}$ is the value of acceleration detected by the second accelerometer (22) along its second detection axis ($y_2$).

11. The computing system according to Claim 1, wherein the signals generated by the first and by the second gyroscopes (24, 26) include a first value ($\omega_1$) and a second value ($\omega_2$) of angular rate, the operation of calculating the second intermediate value ($V\alpha_{LID\_GYR}$) include adding, to the current value of said angle ($\alpha_{LID}$), an angular variation ($\Delta_\alpha$) obtained as a function of the first and the second values of angular rate ($\omega_1$, $\omega_2$).

12. The computing system according to Claim 11, wherein said angular variation ($\Delta_\alpha$) at a current instant (t) is given by:

$$\Delta_\alpha = (\omega_{x1} - \omega_{x2}) \cdot dt$$

where $\omega_{x1}$ is the first value of angular rate, $w_{x2}$ is the second angular value of angular rate, and dt corresponds to the acquisition or sampling time for the signals generated by the first and by the second gyroscopes (24, 26).

13. A method for controlling at least one parameter of a computing system (10) as a function of a value of an opening angle ($\alpha_{LID}$) between a first hardware element (12; 14) and a second hardware element (14; 12), wherein the first hardware element (12; 14) houses a first accelerometer (20; 22) and a first gyroscope (24; 26) and the second hardware element (14; 12) houses a second accelerometer (22; 20) and a second gyroscope (26; 24) and can be oriented with respect to the first hardware element (12),
the method comprising the steps of:

acquiring, from the first and from the second accelerometers (20, 22) respective acceleration signals and from the first and from the second gyroscopes (24, 26) respective angular rate signals;
estimating, based on the acceleration signals, a first intermediate value ($V\alpha_{LID\_ACC}$) of said opening angle ($\alpha_{LID}$), which represents a first angular orientation of the first hardware element (12) relative to the second hardware element (14) ;
estimating, based on the angular rate signals, a second intermediate value ($V\alpha_{LID\_GYR}$) of said opening angle ($\alpha_{LID}$), which represents a second angular orientation of the first hardware element (12) relative to the second hardware element (14) ;
recursively updating a current value of said opening angle ($\alpha_{LID}$), including carrying out a weighted sum of the first intermediate value ($V\alpha_{LID\_ACC}$) and second intermediate value ($V\alpha_{LID\_GYR}$); and
controlling at least one function of said computing system (10) as a function of the current value of the opening angle ($\alpha_{LID}$),
wherein the first hardware element (12) is provided with a first device (18) for interaction with a user, and the second hardware element (14) is provided with a second device (16) for interaction with said user;
wherein the first and the second interaction devices (18, 16) define a first surface (12a) and a second surface (14a), respectively, which face each other directly in a first operating condition of the computing system (10);
wherein:

the first accelerometer (20) is a triaxial accelerometer having a first detection axis (z1), a second detection axis (y1), and a third detection axis (x1) of its own, which is configured to detect an acceleration of the first hardware element (12) with respect to the second hardware element (14) out of a horizontal plane (XY) parallel, in the first operating condition, to the first and to the second surfaces (12a, 14a), said signals generated by the first accelerometer (20) including acceleration values along said first, second, and third detection axes of the first accelerometer (20), and
the second accelerometer (22) is a triaxial accelerometer having a first detection axis (z2), a second detection axis (y2), and a third detection axis (x2) of its own, which is configured to detect an acceleration of the first hardware element (12) with respect to the second hardware element (14) out of a horizontal plane (XY), said signals generated by the second accelerometer (22) including acceleration values along said first, second, and third detection axes of the second accelerometer (22);

wherein the first and the second hardware elements (12, 14) can be oriented with respect to each other in such a way that, in a second operating condition of the computing system (10), the first surface (12a) is orthogonal to the second surface (14a);
and wherein:

the first accelerometer (20) is oriented in such a way that, in the first operating condition, only its first detection axis (z1) is subject to the gravitational acceleration and, in the second operating condition, only its second detection axis (y1) is subject to the gravitational acceleration, and
said calculating unit being configured to reduce a weight assigned to the first intermediate value ($V\alpha_{LID\_ACC}$) and, at the same time, increase a weight assigned to the second intermediate value ($V\alpha_{LID\_GYR}$) during calculation of said sum, which is weighted as a function of the acceleration value detected along the third detection axis (x1) of the first accelerometer (20) in a third operating condition in which the third detection axis (x1) of the first accelerometer (20) is subject to gravitational acceleration.

14. The method according to Claim 13, wherein the step of recursively updating the current value of said opening angle ($\alpha_{LID}$) includes carrying out a low-pass filtering of the first intermediate value ($V\alpha_{LID\_ACC}$) and a high-pass filtering of the second intermediate value ($V\alpha_{LID\_GYR}$).

15. The method according to Claim 14, wherein carrying out filtering includes implementing a complementary filter.

16. The method according to anyone of claims 13-15, wherein the step of carrying out the weighted sum includes performing the operation:

$$k \cdot V\alpha_{LID\_ACC} + (1-k) \cdot V\alpha_{LID\_GYR}$$

where $V\alpha_{LID\_ACC}$ is the first intermediate value, $V\alpha_{LID\_GYR}$ is the second intermediate value, and k has a value equal to, or greater than 0 and less than 1.

17. The method according to Claim 13, wherein the step of carrying out the weighted sum includes implementing a recursive complementary filter defined by:

$$V\alpha_{LID}(t) = k \cdot V\alpha_{LID\_ACC}(t) + (1-k) \cdot (\Delta_\alpha + V\alpha_{LID}(t-1))$$

where:

$V\alpha_{LID}(t)$ is the current value of the opening angle ($\alpha_{LID}$);
k is a weight indicative of a reliability of said measurements of signals of relative orientation of the first and the second hardware elements;
$V\alpha_{LID\_ACC}(t)$ is the first intermediate value;
$\Delta_\alpha$ is an angular variation obtained as a function of a first value ($\omega_1$) and a second value ($\omega_2$) of angular rate measured by the first and by the second gyroscopes (24, 26), respectively; and
$V\alpha_{LID}(t-1)$ is a value of the opening angle preceding the current value in time.

**Patentansprüche**

1. Rechensystem (10), das Folgendes einschließt:

- ein erstes Hardwareelement (12; 14), das einen ersten Beschleunigungsmesser (20; 22) und ein erstes Gyroskop (24; 26) enthält;
- ein zweites Hardwareelement (14; 12), das einen zweiten Beschleunigungsmesser (22; 20) und ein zweites Gyroskop (26; 24) enthält, das in Bezug auf das erste Hardwareelement (12) ausgerichtet werden kann und einen Öffnungswinkel ($\alpha_{LID}$) mit dem ersten Hardwareelement (12; 14) definiert; und
- eine Recheneinheit (27, 28), die so konfiguriert ist, dass sie die Vorgänge ausführt:

Erfassen von jeweiligen Beschleunigungssignalen von den ersten und zweiten Beschleunigungsmessern (20, 22) und von jeweiligen Drehratensignalen von den ersten und zweiten Gyroskopen (24, 26);
Schätzen auf der Grundlage der Beschleunigungssignale einen ersten Zwischenwert ($V\alpha_{LID\_ACC}$) des Öffnungswinkels ($\alpha_{LID}$), der eine erste Winkelausrichtung des ersten Hardwareelements (12) relativ zum zweiten Hardwareelement (14) darstellt;
Schätzen auf der Grundlage der Drehratensignale einen zweiten Zwischenwert ($V\alpha_{LID\_ACC}$) des Öffnungswinkels ($\alpha_{LID}$), der eine erste Winkelausrichtung des ersten Hardwareelements (12) relativ zum zweiten Hardwareelement (14) darstellt;
rekursives Aktualisieren eines aktuellen Wertes des Öffnungswinkels ($\alpha_{LID}$), das das Ausführen einer gewichteten Summe des ersten Zwischenwertes ($V\alpha_{LID\_ACC}$) und des zweiten Zwischenwertes ($V\alpha_{LID\_GYR}$) einschließt; und
Steuern mindestens einer Funktion des Rechensystems (10) auf der Grundlage des aktuellen Werts des Öffnungswinkels ($\alpha_{LID}$),
wobei das erste Hardwareelement (12) mit einer ersten Vorrichtung (18) zur Interaktion mit einem Benutzer ausgestattet ist, und das zweite Hardwareelement (14) mit einer zweiten Vorrichtung (16) zur Interaktion mit dem genannten Benutzer ausgestattet ist;
wobei die erste und die zweite Vorrichtung (18, 16) zur Interaktion eine erste Oberfläche (12a) bzw. eine zweite Oberfläche (14a) definieren, die sich in einem ersten Betriebszustand des Rechensystems (10) direkt gegenüberstehen;

wobei:

der erste Beschleunigungsmesser (20) ein triaxialer Beschleunigungsmesser mit einer ersten Erkennungsachse (zl), einer zweiten Erkennungsachse (y1) und einer eigenen dritten Erkennungsachse (xl) ist, der so konfiguriert ist, dass er eine Beschleunigung des ersten Hardwareelements (12) in Bezug auf das zweite Hardwareelement (14) außerhalb einer horizontalen Ebene (XY) parallel erkennt, im ersten Betriebszustand zu der ersten und der zweiten Oberfläche (12a, 14a), wobei die von dem ersten Beschleunigungsmesser (20) erzeugten Signale Beschleunigungswerte entlang der ersten, zweiten und dritten Erkennungsachse des ersten Beschleunigungsmessers (20) einschließen, und

der zweite Beschleunigungsmesser (22) ein triaxialer Beschleunigungsmesser mit einer ersten Erkennungsachse (z2), einer zweiten Erkennungsachse (y2) und einer eigenen dritten Erkennungsachse (x2) ist, der so konfiguriert ist, dass er eine Beschleunigung des ersten Hardwareelements (12) in Bezug auf das zweite Hardwareelement (14) außerhalb einer horizontalen Ebene (XY) erkennt, wobei die von dem zweiten Beschleunigungsmesser (22) erzeugten Signale Beschleunigungswerte entlang der ersten, zweiten und dritten Erkennungsachse des zweiten Beschleunigungsmessers (22) einschließen;

wobei das erste und das zweite Hardwareelement (12, 14) so aufeinander ausgerichtet werden können, dass in einem zweiten Betriebszustand des Rechensystems (10) die erste Fläche (12a) orthogonal zur zweiten Fläche (14a) verläuft;

und wobei:

der erste Beschleunigungsmesser (20) so ausgerichtet ist, dass im ersten Betriebszustand nur seine erste Erkennungsachse (zl) der Gravitationsbeschleunigung unterliegt und im zweiten Betriebszustand nur seine zweite Erkennungsachse (yl) der Gravitationsbeschleunigung unterliegt, und

die besagte Recheneinheit so konfiguriert ist, dass sie ein dem ersten Zwischenwert ($V\alpha_{\text{LID\_ACC}}$) zugewiesenes Gewicht reduziert

und gleichzeitig ein Gewicht erhöhen, das dem zweiten Zwischenwert ($V\alpha_{\text{LID\_GYR}}$) während der Berechnung der Summe zugewiesen wird, der in Abhängigkeit von dem entlang der dritten Erkennungsachse (xl) des ersten Beschleunigungsmessers (20) in einem dritten Betriebszustand, in dem die dritte Erkennungsachse (xl) des ersten Beschleunigungsmessers (20) einer Gravitationsbeschleunigung unterliegt, gewichtet wird.

2. Rechensystem nach Anspruch 1, wobei der Vorgang des rekursiven Aktualisierens des aktuellen Wertes des Öffnungswinkels ($\alpha_{\text{LID}}$) die Implementierung einer Tiefpassfilterung des ersten Zwischenwertes ($V\alpha_{\text{LID\_ACC}}$) und einer Hochpassfilterung des zweiten Zwischenwertes ($V\alpha_{\text{LID\_GYR}}$) einschließt.

3. Rechensystem nach Anspruch 2, wobei die Filterung mittels eines komplementären Filters erfolgt.

4. Rechensystem nach einem der vorstehenden Ansprüche, wobei der Vorgang der Durchführung der gewichteten Summe die Durchführung des Vorgangs einschließt:

$$k \bullet V\alpha_{\text{LID\_ACC}} + (1-k) \bullet V\alpha_{\text{LID\_GYR}}$$

wobei $V\alpha_{\text{LID\_ACC}}$ der erste Zwischenwert ist, $V\alpha_{\text{LID\_GYR}}$ der zweite Zwischenwert ist und k ein Gewicht ist, das einen Wert gleich oder größer als 0 und kleiner als 1 aufweist.

5. Rechensystem nach Anspruch 1, wobei der Vorgang der Durchführung der gewichteten Summe die Implementierung eines rekursiven komplementären Filters einschließt, der durch Folgendes definiert ist:

$$V\alpha_{\text{LID}}(t) = k \bullet V\alpha_{\text{LID\_ACC}}(t) + (1-k) \bullet (\Delta_\alpha + V\alpha_{\text{LID}}(t-1))$$

wobei:

$V\alpha_{\text{LID}}(t)$ der aktuelle Wert des Öffnungswinkels ($\alpha_{\text{LID}}$) ist;
k ein Gewicht ist, das die Zuverlässigkeit der Messsignale für die relative Ausrichtung des ersten und des

zweiten Hardwareelements angibt;

$V\alpha_{LID\_ACC}$ (t) der erste Zwischenwert ist;

$D_\alpha$ eine Winkeländerung ist, die als Funktion eines ersten Wertes ($\omega_1$) und eines zweiten Wertes ($\omega_2$) der Drehrate erhalten wird, die von dem ersten bzw. dem zweiten Gyroskop (24, 26) gemessen werden; und

$V\alpha_{LID}$(t-1) ein Wert des Öffnungswinkels ist, der dem aktuellen Wert zeitlich vorsteht.

6. Rechensystem nach einem der vorstehenden Ansprüche, wobei der Vorgang des Steuerns mindestens einer Funktion des Rechensystems (10) auf der Grundlage des aktuellen Wertes des Winkels ($\alpha_{LID}$) die Anpassung der Betriebscharakteristiken der ersten Interaktionsvorrichtung (18) und/oder der zweiten Interaktionsvorrichtung (16) umfasst.

7. Rechensystem nach einem der vorstehenden Ansprüche, wobei die erste Interaktionsvorrichtung (18) und die zweite Interaktionsvorrichtung (16) ausgewählt sind aus: Einem Display, einer Tastatur, einem Tablet und einem Smartphone.

8. Rechensystem nach Anspruch 4 oder Anspruch 5, wobei im dritten Betriebszustand die dritte Erkennungsachse ($x_1$) des ersten Beschleunigungsmessers (20) einen anderen Winkel als 90° mit dem Gravitationsbeschleunigungsvektor (g) bildet, wobei das Gewicht (k) einen Wert hat, der eine Funktion des Wertes des Winkels zwischen der dritten Erkennungsachse ($x_1$) des ersten Beschleunigungsmessers (20) und dem Gravitationsbeschleunigungsvektor (g) ist.

9. Rechensystem nach einem der vorstehenden Ansprüche, wobei im ersten Betriebszustand die erste Erkennungsachse ($z_1$) des ersten Beschleunigungsmessers (20) parallel zum Gravitationsbeschleunigungsvektor (g) verläuft, während die zweite und die dritte Erkennungsachse ($y_1$, $x_1$) senkrecht zum Gravitationsbeschleunigungsvektor (g) verlaufen; und im zweiten Betriebszustand die zweite Erkennungsachse ($y_1$) des ersten Beschleunigungsmessers (20) parallel zum Gravitationsbeschleunigungsvektor (g) verläuft, während die erste und die dritte Erkennungsachse ($z_1$, $x_1$) senkrecht zum Gravitationsbeschleunigungsvektor (g) verlaufen

10. Rechensystem nach Anspruch 1, wobei die Berechnung des ersten Zwischenwertes ($V\alpha_{LID\_ACC}$) die Durchführung des Vorgangs einschließt:

$$\mathtt{atan2}\left(\frac{A_{z1}A_{y2} - A_{y1}A_{z2}}{A_{z1}A_{z2} + A_{y1}A_{y2}}\right) + \pi$$

wobei $A_{z1}$ ein Wert der vom ersten Beschleunigungsmesser (20) entlang seiner ersten Erkennungsachse ($z_1$) erfassten Beschleunigung ist, $A_{y1}$ der Wert der vom ersten Beschleunigungsmesser (20) entlang seiner zweiten Erkennungsachse ($y_1$) erfassten Beschleunigung ist, $A_{z2}$ der Wert der vom zweiten Beschleunigungsmesser (22) entlang seiner ersten Erkennungsachse ($z_2$) erfassten Beschleunigung ist, und $A_{y2}$ der Wert der vom zweiten Beschleunigungsmesser (22) entlang seiner zweiten Erkennungsachse ($y_2$) erfassten Beschleunigung ist.

11. Rechensystem nach Anspruch 1, wobei die von dem ersten und dem zweiten Gyroskop (24, 26) erzeugten Signale einen ersten Wert ($\omega_1$) und einen zweiten Wert ($\omega_2$) der Drehrate einschließen, wobei der Vorgang der Berechnung des zweiten Zwischenwerts ($V\alpha_{LID\_GYR}$) das Hinzurechnen einer Winkeländerung ($\Delta_\alpha$), die in Abhängigkeit von dem ersten und dem zweiten Wert der Drehrate ($\omega_1$, $\omega_2$) erhalten wird, zu dem aktuellen Wert des Winkels ($\alpha_{LID}$) einschließt.

12. Rechensystem nach Anspruch 11, wobei die Winkeländerung ($\Delta_\alpha$) zu einem aktuellen Zeitpunkt (t) folgendermaßen gegeben ist:

$$\Delta_\alpha = (\omega_{x1} - \omega_{x2}) \bullet \mathtt{dt}$$

wobei $\omega_{x1}$ der erste Wert der Drehrate, $\omega_{x2}$ der zweite Wert der Drehrate und dt die Erfassungs- oder Abtastzeit für die vom ersten und vom zweiten Gyroskop (24, 26) erzeugten Signale ist.

**13.** Verfahren zum Steuern mindestens eines Parameters eines Rechensystems (10) in Abhängigkeit von einem Wert eines Öffnungswinkels ($\alpha_{LID}$) zwischen einem ersten Hardwareelement (12; 14) und einem zweiten Hardwareelement (14; 12), wobei das erste Hardwareelement (12; 14) einen ersten Beschleunigungsmesser (20; 22) und ein erstes Gyroskop (24; 26) enthält und das zweite Hardwareelement (14; 12) einen zweiten Beschleunigungsmesser (22; 20) und ein zweites Gyroskop (26; 24) enthält und in Bezug auf das erste Hardwareelement (12) ausgerichtet werden kann,

das Verfahren umfasst die folgenden Schritte:

Erfassen von jeweiligen Beschleunigungssignalen von den ersten und zweiten Beschleunigungsmessern (20, 22) und von jeweiligen Drehratensignalen von den ersten und zweiten Gyroskopen (24, 26);

Schätzen auf der Grundlage der Beschleunigungssignale einen ersten Zwischenwert ($V\alpha_{LID\_ACC}$) des Öffnungswinkels ($\alpha_{LID}$), der eine erste Winkelausrichtung des ersten Hardwareelements (12) relativ zum zweiten Hardwareelement (14) darstellt;

Schätzen auf der Grundlage der Drehratensignale einen zweiten Zwischenwert ($V\alpha_{LID\_GYR}$) des Öffnungswinkels ($\alpha_{LID}$), der eine erste Winkelausrichtung des ersten Hardwareelements (12) relativ zum zweiten Hardwareelement (14) darstellt;

rekursives Aktualisieren eines aktuellen Wertes des Öffnungswinkels ($\alpha_{LID}$), das das Ausführen einer gewichteten Summe des ersten Zwischenwertes ($V\alpha_{LID\_ACC}$) und des zweiten Zwischenwertes ($V\alpha_{LID\_GYR}$) einschließt; und

Steuern mindestens einer Funktion des Rechensystems (10) in Abhängigkeit vom aktuellen Wert des Öffnungswinkels ($\alpha_{LID}$),

wobei das erste Hardwareelement (12) mit einer ersten Vorrichtung (18) zur Interaktion mit einem Benutzer ausgestattet ist, und das zweite Hardwareelement (14) mit einer zweiten Vorrichtung (16) zur Interaktion mit dem Benutzer ausgestattet ist;

wobei die erste und die zweite Vorrichtung (18, 16) zur Interaktion eine erste Oberfläche (12a) bzw. eine zweite Oberfläche (14a) definieren, die sich in einem ersten Betriebszustand des Rechensystems (10) direkt gegenüberstehen;

wobei:

der erste Beschleunigungsmesser (20) ein triaxialer Beschleunigungsmesser mit einer ersten Erkennungsachse (z1), einer zweiten Erkennungsachse (y1) und einer eigenen dritten Erkennungsachse ($x_1$) ist, der so konfiguriert ist, dass er eine Beschleunigung des ersten Hardwareelements (12) in Bezug auf das zweite Hardwareelement (14) außerhalb einer horizontalen Ebene (XY) parallel erkennt, im ersten Betriebszustand zu der ersten und der zweiten Oberfläche (12a, 14a), wobei die von dem ersten Beschleunigungsmesser (20) erzeugten Signale Beschleunigungswerte entlang der ersten, zweiten und dritten Erkennungsachse des ersten Beschleunigungsmessers (20) einschließen, und

der zweite Beschleunigungsmesser (22) ein triaxialer Beschleunigungsmesser mit einer ersten Erkennungsachse (z2), einer zweiten Erkennungsachse (y2) und einer eigenen dritten Erkennungsachse (x2) ist, der so konfiguriert ist, dass er eine Beschleunigung des ersten Hardwareelements (12) in Bezug auf das zweite Hardwareelement (14) außerhalb einer horizontalen Ebene (XY) erkennt, wobei die von dem zweiten Beschleunigungsmesser (22) erzeugten Signale Beschleunigungswerte entlang der ersten, zweiten und dritten Erkennungsachse des zweiten Beschleunigungsmessers (22) einschließen;

wobei das erste und das zweite Hardwareelement (12, 14) so aufeinander ausgerichtet werden können, dass in einem zweiten Betriebszustand des Rechensystems (10) die erste Fläche (12a) orthogonal zur zweiten Fläche (14a) verläuft;

und wobei:

Der erste Beschleunigungsmesser (20) so ausgerichtet ist, dass im ersten Betriebszustand nur seine erste Erkennungsachse (z1) der Gravitationsbeschleunigung unterliegt und im zweiten Betriebszustand nur seine zweite Erkennungsachse (y1) der Gravitationsbeschleunigung unterliegt, und

die besagte Recheneinheit so konfiguriert ist, dass sie ein dem ersten Zwischenwert ($V\alpha_{LID\_ACC}$) zugewiesenes Gewicht reduziert, und gleichzeitig ein Gewicht erhöhen, das dem zweiten Zwischenwert ($V\alpha_{LID\_GYR}$) während der Berechnung der Summe zugewiesen wird, der in Abhängigkeit von dem entlang der dritten Erkennungsachse (x1) des ersten Beschleunigungsmessers (20) in einem dritten Betriebszustand, in dem die dritte Erkennungsachse (x1) des ersten Beschleunigungsmessers (20) einer Gravitationsbeschleunigung unterliegt, gewichtet wird.

**14.** Verfahren nach Anspruch 13, wobei der Schritt der rekursiven Aktualisierung des aktuellen Wertes des Öffnungs-

winkels ($\alpha_{LID}$) die Durchführung einer Tiefpassfilterung des ersten Zwischenwertes ($V\alpha_{LID\_ACC}$) und einer Hochpassfilterung des zweiten Zwischenwertes ($V\alpha_{LID\_GYR}$) einschließt.

15. Verfahren nach Anspruch 14, wobei die Durchführung der Filterung die Implementierung eines komplementären Filters einschließt.

16. Verfahren nach einem der Ansprüche 13 - 15, wobei der Schritt der Durchführung der gewichteten Summe die Durchführung des Vorgangs einschließt:

$$K \bullet V\alpha_{LID\_ACC} + (1-k) \bullet V\alpha_{LID\_GYR}$$

wobei $V\alpha_{LID\_ACC}$ der erste Zwischenwert ist, $V\alpha_{LID\_GYR}$ der zweite Zwischenwert ist und k einen Wert aufweist, der gleich oder größer als O und kleiner als 1 ist.

17. Verfahren nach Anspruch 13, wobei der Schritt der Durchführung der gewichteten Summe die Implementierung eines rekursiven komplementären Filters einschließt, der durch Folgendes definiert ist:

$$V\alpha_{LID}(t) = k \bullet V\alpha_{LID\_ACC}(t) + (1-k) \bullet (\Delta_\alpha + V\alpha_{LID}(t-1))$$

wobei:

$V\alpha_{LID}(t)$ der aktuelle Wert des Öffnungswinkels ($\alpha_{LID}$) ist;
k ein Gewicht ist, das die Zuverlässigkeit der Messungen der Signale für die relative Ausrichtung des ersten und des zweiten Hardwareelements angibt;
$V\alpha_{LID\_ACC}(t)$ der erste Zwischenwert ist;
$\Delta_\alpha$ eine Winkeländerung ist, die als Funktion eines ersten Wertes ($\omega_1$) und eines zweiten Wertes ($\omega_2$) der Drehrate erhalten wird, die von dem ersten bzw. dem zweiten Gyroskop (24, 26) gemessen werden; und
$V\alpha_{LID}(t-1)$ ein Wert des Öffnungswinkels ist, der dem aktuellen Wert zeitlich vorsteht.


**Revendications**

1. Système informatique (10) incluant :

un premier élément de matériel (12; 14), logeant un premier accéléromètre (20; 22) et un premier gyroscope (24; 26) ;
un second élément de matériel (14; 12), logeant un second accéléromètre (22; 20) et un second gyroscope (26; 24), qui peut être orienté par rapport au premier élément de matériel (12), et définit un angle d'ouverture ($\alpha_{LID}$) avec ledit premier élément de matériel (12; 14) ; et
une unité de calcul (27, 28) configurée pour réaliser les opérations de :

acquisition, depuis les premier et second accéléromètres (20, 22) de signaux d'accélération respectifs et depuis les premier et second gyroscopes (24, 26), de signaux de vitesse angulaire respectifs ;
estimation, sur la base des signaux d'accélération, d'une première valeur intermédiaire ($V\alpha_{LID\_ACC}$) dudit angle d'ouverture ($\alpha_{LID}$), qui représente une première orientation angulaire du premier élément de matériel (12) relativement au second élément de matériel (14) ;
estimation, sur la base des signaux de vitesse angulaire, d'une seconde valeur intermédiaire ($V\alpha_{LID\_GYR}$) dudit angle d'ouverture ($\alpha_{LID}$), qui représente une seconde orientation angulaire du premier élément de matériel (12) relativement au second élément de matériel (14) ;
mise à jour récursivement d'une valeur courante dudit angle d'ouverture ($\alpha_{LID}$), incluant d'effectuer une somme pondérée de la première valeur intermédiaire ($V\alpha_{LID\_ACC}$) et la seconde valeur intermédiaire ($V\alpha_{LID\_GYR}$) ; et
commande d'au moins une fonction dudit système informatique (10) sur la base de la valeur courante de l'angle d'ouverture ($\alpha_{LID}$),
dans lequel le premier élément de matériel (12) est pourvu d'un premier dispositif (18) pour interaction avec un utilisateur, et le second élément de matériel (14) est pourvu d'un second dispositif (16) pour interaction avec ledit utilisateur ;

dans lequel les premier et second dispositifs d'interaction (18, 16) définissent une première surface (12a) et une seconde surface (14a), respectivement, qui se font face directement dans un premier état de fonctionnement du système informatique (10) ;

dans lequel :

le premier accéléromètre (20) est un accéléromètre triaxial ayant un premier axe de détection (z1), un second axe de détection (y1), et un troisième axe de détection (x1), propres, qui est configuré pour détecter une accélération du premier élément de matériel (12) par rapport au second élément de matériel (14) hors d'un plan horizontal (XY) parallèle, dans le premier état de fonctionnement, aux première et seconde surfaces (12a, 14a), lesdits signaux générés par ledit premier accéléromètre (20) incluant des valeurs d'accélération le long desdits premier, second, et troisième axes de détection du premier accéléromètre (20), et

le second accéléromètre (22) est un accéléromètre triaxial ayant un premier axe de détection (z1), un second axe de détection (y2), et un troisième axe de détection (x2), propres, qui est configuré pour détecter une accélération du premier élément de matériel (12) par rapport au second élément de matériel (14) hors d'un plan horizontal (XY), lesdits signaux générés par ledit second accéléromètre (22) incluant des valeurs d'accélération le long desdits premier, second, et troisième axes de détection du second accéléromètre (22) ;

dans lequel les premier et second éléments de matériel (12; 14) peuvent être orientés l'un par rapport à l'autre de telle manière que, dans un second état de fonctionnement du système informatique (10), la première surface (12a) est orthogonale à la seconde surface (14a) ;

et dans lequel :

le premier accéléromètre (20) est orienté de telle manière que, dans le premier état de fonctionnement, seul son premier axe de détection (z1) est soumis à l'accélération gravitationnelle, et dans le second état de fonctionnement, seul son second axe de détection (y1) est soumis à l'accélération gravitationnelle, et

ladite unité de calcul étant configurée pour réduire un poids attribué à la première valeur intermédiaire ($V\alpha_{LID\_ACC}$) et, dans le même temps, augmenter un poids attribué à la seconde valeur intermédiaire ($V\alpha_{LID\_GYR}$) pendant le calcul de ladite somme, qui est pondérée en fonction de la valeur d'accélération détectée le long du troisième axe de détection (x1) du premier accéléromètre (20) dans un troisième état de fonctionnement dans lequel le troisième axe de détection (x1) du premier accéléromètre (20) est soumis à une accélération gravitationnelle.

2.  Système informatique selon la revendication 1, dans lequel l'opération de mise à jour récursive de la valeur courante dudit angle d'ouverture ($\alpha_{LID}$) inclut de réaliser un filtrage passe-bas de la première valeur intermédiaire ($V\alpha_{LID\_ACC}$) et un filtrage passe-haut de la seconde valeur intermédiaire ($V\alpha_{LID\_GYR}$).

3.  Système informatique selon la revendication 2, dans lequel ledit filtrage est réalisé au moyen d'un filtre complémentaire.

4.  Système informatique selon l'une quelconque des revendications précédentes, dans lequel l'opération d'effectuer la somme pondérée inclut d'effectuer l'opération ;

$$k.V\alpha_{LID\_ACC} + (1- k).V\alpha_{LID\_GYR}$$

où $V\alpha_{LID\_ACC}$ est la première valeur intermédiaire, $V\alpha_{LID\_GYR}$ est la seconde valeur intermédiaire, et k est un poids ayant une valeur supérieure ou égale à 0, et inférieure à 1.

5.  Système informatique selon la revendication 1, dans lequel l'opération de réalisation de la somme pondérée inclut de mettre en oeuvre un filtre complémentaire récursif défini par :

$$V\alpha_{LID}(t) = k.\ V\alpha_{LID\_ACC}(t) + (1-k).(\Delta_\alpha + V\alpha_{LID}(t-1))$$

où :

$V\alpha_{LID}$(t) est la valeur courante de l'angle d'ouverture ($\alpha_{LID}$)

k est un poids indicatif d'une fiabilité desdits signaux de mesure de l'orientation relative des premier et second éléments de matériel ;

$V\alpha_{LID\_ACC}$ (t) est la première valeur intermédiaire ;

$\Delta_\alpha$ est une variation angulaire obtenue en fonction d'une première valeur ($\omega_1$) et une seconde valeur ($\omega_2$) de vitesse angulaire mesurées par les premier et second gyroscopes (24, 26), respectivement ; et

$V\alpha_{LID}$(t-1) est une valeur de l'angle d'ouverture précédant dans le temps la valeur courante.

**6.** Système informatique selon l'une quelconque des revendications précédentes, dans lequel l'opération de commande d'au moins une fonction dudit système informatique (10) sur la base de la valeur courante dudit angle d'ouverture ($\alpha_{LID}$) comprend d'adapter les caractéristiques de fonctionnement du premier dispositif d'interaction (18) et/ou du second dispositif d'interaction (16).

**7.** Système informatique selon l'une quelconque des revendications précédentes, dans lequel le premier dispositif d'interaction (18) et le second dispositif d'interaction (16) sont choisis parmi : un affichage, un clavier, une tablette, et un smartphone.

**8.** Système informatique selon la revendication 4 ou la revendication 5, dans lequel, dans le troisième état de fonctionnement, le troisième axe de détection (x1) du premier accéléromètre (20) forme un angle autre que 90° avec le vecteur d'accélération gravitationnelle (g), ledit poids (k) ayant une valeur qui est une fonction de la valeur de l'angle entre le troisième axe de détection (x1) du premier accéléromètre (20) et le vecteur d'accélération gravitationnelle (g).

**9.** Système informatique selon l'une quelconque des revendications précédentes, dans lequel, dans le premier état de fonctionnement, le premier axe de détection (z1) du premier accéléromètre (20) est parallèle au vecteur d'accélération gravitationnelle (g), alors que les second et troisième axes de détection (y1, x1) sont perpendiculaires au vecteur d'accélération gravitationnelle (g) ; et dans le second état de fonctionnement, le second axe de détection (y1) du premier accéléromètre (20) est parallèle au vecteur d'accélération gravitationnelle (g), alors que les premier et troisième axes de détection (z1, x1) sont perpendiculaires au vecteur d'accélération gravitationnelle (g).

**10.** Système informatique selon la revendication 1, dans lequel le calcul de la première valeur intermédiaire ($V\alpha_{LID\_ACC}$) inclut d'exécuter l'opération :

$$atan2\left(\frac{A_{Z1}.A_{Y2} - A_{Y1}.A_{Z2}}{A_{Z1}.A_{Z2} + A_{Y1}.A_{Y2}}\right) + \pi$$

où

$A_{z1}$ est une valeur d'accélération détectée par le premier accéléromètre (20) le long de son premier axe de détection (z1), $A_{y1}$ est la valeur d'accélération détectée par le premier accéléromètre (20) le long de son second axe de détection (y1), $A_{z2}$ est la valeur d'accélération détectée par le second accéléromètre (22) le long de son premier axe de détection (z2), et $A_{y2}$ est la valeur d'accélération détectée par le second accéléromètre (22) le long de son second axe de détection (y2).

**11.** Système informatique selon la revendication 1, dans lequel les signaux générés par les premier et second gyroscopes (24, 26) incluent une première valeur ($\omega_1$) et une seconde valeur ($\omega_2$) de vitesse angulaire, l'opération de calcul de la seconde valeur intermédiaire ($V\alpha_{LID\_GYR}$) inclut d'ajouter, à la valeur courante dudit angle ($\alpha_{LID}$), une variation angulaire ($\Delta_\alpha$) obtenue comme une fonction des première et seconde valeurs de vitesse angulaire ($\omega_1$, $\omega_2$).

**12.** Système informatique selon la revendication 11, dans lequel ladite variation angulaire ($\Delta_\alpha$) à un instant courant (t) est donnée par :

$$\Delta_\alpha = (\omega_{x1} - \omega_{x2}).dt$$

où $\omega_{x1}$ est la première valeur de vitesse angulaire, $\omega_{x2}$ est la seconde valeur angulaire de vitesse angulaire, et dt correspond au temps d'acquisition ou d'échantillonnage pour les signaux générés par les premier et second gyroscopes (24, 26).

**13.** Procédé de commande d'au moins un paramètre d'un système informatique (10) en fonction d'une valeur d'un angle d'ouverture ($\alpha_{LID}$) entre un premier élément de matériel (12; 14) et un second élément de matériel (14; 12), dans lequel le premier élément de matériel (12; 14) loge un premier accéléromètre (20; 22) et un premier gyroscope (24; 26) et le second élément de matériel (14; 12) loge un second accéléromètre (22; 20) et un second gyroscope (26; 24) et peut être orienté par rapport au premier élément de matériel (12),
le procédé comprenant les étapes de :

acquérir, depuis les premier et second accéléromètres (20, 22) des signaux d'accélération respectifs et depuis les premier et second gyroscopes (24, 26) des signaux de vitesse angulaire respectifs ;
estimer, sur la base des signaux d'accélération, une première valeur intermédiaire ($V\alpha_{LID\_ACC}$) dudit angle d'ouverture ($\alpha_{LID}$), qui représente une première orientation angulaire du premier élément de matériel (12) relativement au second élément de matériel (14) ;
estimer, sur la base des signaux de vitesse angulaire, une seconde valeur intermédiaire ($V\alpha_{LID\_GYR}$) dudit angle d'ouverture ($\alpha_{LID}$), qui représente une seconde orientation angulaire du premier élément de matériel (12) relativement au second élément de matériel (14) ;
mettre à jour récursivement une valeur courante dudit angle d'ouverture ($\alpha_{LID}$), incluant d'effectuer une somme pondérée de la première valeur intermédiaire ($V\alpha_{LID\_ACC}$) et la seconde valeur intermédiaire ($V\alpha_{LID\_GYR}$) ; et
commander au moins une fonction dudit système informatique (10) comme une fonction de la valeur courante de l'angle d'ouverture ($\alpha$LID),
dans lequel le premier élément de matériel (12) est pourvu d'un premier dispositif (18) pour interaction avec un utilisateur, et le second élément de matériel (14) est pourvu d'un second dispositif (16) pour interaction avec ledit utilisateur ;
dans lequel les premier et second dispositifs d'interaction (18, 16) définissent une première surface (12a) et une seconde surface (14a), respectivement, qui se font face directement dans un premier état de fonctionnement du système informatique (10) ;
dans lequel :

le premier accéléromètre (20) est un accéléromètre triaxial ayant un premier axe de détection (z1), un second axe de détection (y1), et un troisième axe de détection (x1), propres, qui est configuré pour détecter une accélération du premier élément de matériel (12) par rapport au second élément de matériel (14) hors d'un plan horizontal (XY) parallèle, dans le premier état de fonctionnement, aux première et seconde surfaces (12a, 14a), lesdits signaux générés par ledit premier accéléromètre (20) incluant des valeurs d'accélération le long desdits premier, second, et troisième axes de détection du premier accéléromètre (20), et
le second accéléromètre (22) est un accéléromètre triaxial ayant un premier axe de détection (z2), un second axe de détection (y2), et un troisième axe de détection (x2), propres, qui est configuré pour détecter une accélération du premier élément de matériel (12) par rapport au second élément de matériel (14) hors d'un plan horizontal (XY), lesdits signaux générés par ledit second accéléromètre (22) incluant des valeurs d'accélération le long desdits premier, second, et troisième axes de détection du second accéléromètre (22) ;
dans lequel les premier et second éléments de matériel (12; 14) peuvent être orientés l'un par rapport à l'autre de telle manière que, dans un second état de fonctionnement du système informatique (10), la première surface (12a) est orthogonale à la seconde surface (14a) ;
et dans lequel :

le premier accéléromètre (20) est orienté de telle manière que, dans le premier état de fonctionnement, seul son premier axe de détection (z1) est soumis à l'accélération gravitationnelle, et dans le second état de fonctionnement, seul son second axe de détection (y1) est soumis à l'accélération gravitationnelle, et
ladite unité de calcul étant configurée pour réduire un poids attribué à la première valeur intermédiaire ($V\alpha_{LID\_ACC}$) et, dans le même temps, augmenter un poids attribué à la seconde valeur intermédiaire ($V\alpha_{LID\_GYR}$) pendant le calcul de ladite somme, qui est pondérée comme une fonction de la valeur d'accélération détectée le long du troisième axe de détection (x1) du premier accéléromètre (20) dans un troisième état de fonctionnement dans lequel le troisième axe de détection (x1) du premier accéléromètre (20) est soumis à une accélération gravitationnelle.

**14.** Procédé selon la revendication 13 dans lequel l'étape de mise à jour récursive de la valeur courante dudit angle d'ouverture ($\alpha_{LID}$) inclut de réaliser un filtrage passe-bas de la première valeur intermédiaire ($V\alpha_{LID\_ACC}$) et un filtrage passe-haut de la seconde valeur intermédiaire ($V\alpha_{LID\_GYR}$).

**15.** Procédé selon la revendication 14 dans lequel réaliser le filtrage inclut de mettre en oeuvre un filtre complémentaire.

**16.** Procédé selon l'une quelconque des revendications 13-15 dans lequel l'étape de réalisation de la somme pondérée inclut d'effectuer l'opération ;

$$k. \, V\alpha_{LID\_ACC} + (1- k). \, V\alpha_{LID\_GYR}$$

où $V\alpha_{LID\_ACC}$ est la première valeur intermédiaire, $V\alpha_{LID\_GYR}$ est la seconde valeur intermédiaire, et k a une valeur supérieure ou égale à 0, et inférieure à 1.

**17.** Procédé selon la revendication 13 dans lequel l'étape de réalisation de la somme pondérée inclut de mettre en oeuvre un filtre complémentaire récursif défini par :

$$V\alpha_{LID} (t) = k. \, V\alpha_{LID\_ACC} (t) + (1-k).(\Delta_\alpha + V\alpha_{LID} (t-1))$$

où :

$V\alpha_{LID} (t)$ est la valeur courante de l'angle d'ouverture ($\alpha_{LID}$)
k est un poids indicatif d'une fiabilité desdits signaux de mesure de l'orientation relative des premier et second éléments de matériel ;
$V\alpha_{LID\_ACC} (t)$ est la première valeur intermédiaire ;
$\Delta_\alpha$ est une variation angulaire obtenue en fonction d'une première valeur ($\omega_1$) et une seconde valeur ($\omega_2$) de vitesse angulaire mesurées par les premier et second gyroscopes (24, 26), respectivement ; et
$V\alpha_{LID} (t-1)$ est une valeur de l'angle d'ouverture précédant dans le temps la valeur courante.

FIG. 1

EP 3 407 157 B1

EP 3 407 157 B1

FIG. 2

FIG. 3

# FIG. 4

EP 3 407 157 B1

## FIG. 5

**EP 3 407 157 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102017000057066
- US 2015130725 A
- US 2015116362 A